# EUROPEAN PATENT APPLICATION

(11) **EP 4 546 074 A1**
(43) Date of publication of application: **30.04.2025**
(21) Application number: 24193871.1
(22) Date of filing: 09.08.2024
(51) Int. Cl.: G05D 1/245, G05D 1/246, G05D 1/661, G05D 105/15, G05D 107/20, G05D 109/10, G05D 111/50, A01D 34/00

(54) **IMPROVED NAVIGATION FOR A ROBOTIC WORK TOOL SYSTEM**

(30) Priority: 23.10.2023 SE 2351214
(71) Applicant: Husqvarna AB, 561 82 Huskvarna (SE)
(72) Inventor: Svensson, Tommy, Huskvarna (SE); Mårtensson, Anton, Huskvarna (SE); Hellsin, Beppe, Huskvarna (SE); Blom, Robert, Huskvarna (SE); Gazrawi, Sarkan, Huskvarna (SE)

(57) **Abstract**

A method for use in a robotic work tool (100) arranged to operate in an operational area (205) housing a charging station (210), the robotic work tool (100) comprising a navigation sensor (175, 170, 180, 185) and a memory (120) storing a map application (120A) of the operational area (205), the method comprising: detecting that there has been a change in a location of the charging station (210), and in response thereto determining that the change is below a threshold acceptance level, and if so, automatically updating the location (210M) of the charging station (210) in the map application (120A) of the operational area (205).

## Description

### TECHNICAL FIELD

This application relates to a robotic work tool and in particular to a system and a method for providing an improved navigation for robotic work tools, such as lawnmowers, in such a system.

### BACKGROUND

Automated or robotic work tools such as robotic lawnmowers are becoming increasingly more popular and so is the use of the robotic work tool in various types of operational areas. Furthermore, there is also a trend for satellite navigation and virtual borders for such robotic lawnmowers and specifically for performing (sophisticated) patterns in the grass.

Use of such virtual borders and/or requirements for sophisticated patterns require a detailed installation especially as regards a map application which stores the location of various objects in the operational area. Due to various safety regulations once an installation has been made, any changes have to be confirmed manually by an operator or user on site. In some systems, the reconfirmation is performed by remote controlling the robotic work tool to follow boundaries of the operational area and possibly to visit all known obstacles in the operational area. This is very time-consuming especially if needed to be repeated.

### SUMMARY

The inventors have realized a problem in that sometimes parts of the installation change beyond a user's control. And forcing a user to go out to the operational area - or even worse, order a professional technician to go to the operational area - to confirm the new setup is both time consuming and annoying.

Thus, the inventors have realized that there is a need for an improved manner of updating an installation as regards changes, voluntary or involuntary.

Specifically, the inventors have realized a problem in that the position of a charging station (or other service station) may change slightly, which would require a reconfirmation of an operational area's characteristics (location of boundary and obstacles), without even having any real consequences for the safety of the system - only for the ability for the robotic work tool to dock in the charging station easily.

The inventors are therefore proposing to overcome such confirmation by enabling the robotic work tool to determine that there has been a change in location of the charging station, and in response thereto determine that the change is below a threshold acceptance level, and if so, automatically updating the location of the charging station in a map application of the operational area.

It is therefore an object of the teachings of this application to overcome or at least reduce such problems by providing a robotic work tool arranged to operate in an operational area housing a service station such as a charging station, the robotic work tool comprising a navigation sensor, a memory storing a map application of the operational area and a controller, wherein the controller is configured to detect that there has been a change in a location of the charging station, and in response thereto determine that the change is below a threshold acceptance level, and if so, updating the location of the charging station in the map application of the operational area.

This has the benefit that the robotic work tool is enabled to update the location without a user having to manually reconfirm the operational area.

It is also an object of the teachings of this application to overcome the problems by providing a robotic work tool system comprising a robotic work tool according to herein and a service station.

It is also an object of the teachings of this application to overcome the problems by providing a method for use in a method for use in a robotic work tool arranged to operate in an operational area housing a service station such as a charging station, the robotic work tool comprising a navigation sensor and a memory storing a map application of the operational area, the method comprising: detecting that there has been a change in a location of the charging station, and in response thereto determining that the change is below a threshold acceptance level, and if so, automatically updating the location of the charging station in the map application of the operational area.

Further embodiments and aspects are as in the attached patent claims and as discussed in the detailed description.

Other features and advantages of the disclosed embodiments will appear from the following detailed disclosure, from the attached dependent claims as well as from the drawings. Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of the element, device, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention will be described in further detail under reference to the accompanying drawings in which:
Figure 1 shows a schematic view of the components of an example of a robotic work tool being a robotic lawnmower according to some example embodiments of the teachings herein;
Figure 2 shows a schematic view of a robotic work tool system according to some example embodiments of the teachings herein;
Figures 3A, 3B and 3C each shows a schematic view of a service station that has been moved and how the robotic work tool adapts according to some example embodiments of the teachings herein;
Figures 4A, 4B, 4C, 4D, 4E and 4F each shows a schematic view of a service station that has been moved and how the robotic work tool adapts a docking point according to some example embodiments of the teachings herein; and

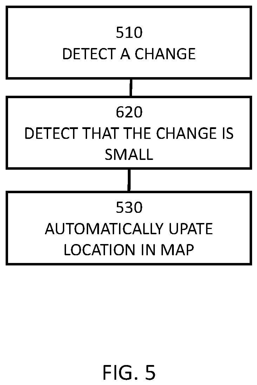

Figure 5 shows a corresponding flowchart for a method according to some example embodiments of the teachings herein.

### DETAILED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein. Like reference numbers refer to like elements throughout.

It should be noted that even though the description given herein will be focused on robotic lawnmowers, the teachings herein may also be applied to, robotic ball collectors, robotic mine sweepers, robotic farming equipment, or other robotic work tools.

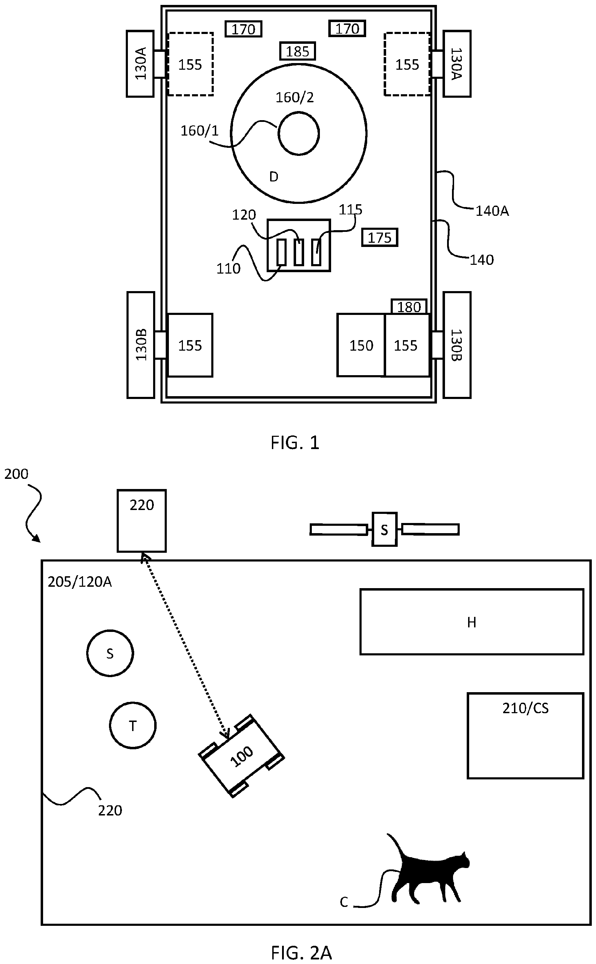

Figure 1 shows a schematic overview of a robotic work tool 100, here exemplified by a robotic lawnmower 100. The robotic work tool 100 may be a multi-chassis type or a mono-chassis type (as in figure 1). A multi-chassis type comprises more than one main body parts that are movable with respect to one another. A mono-chassis type comprises only one main body part.

It should be noted that robotic lawnmower may be of different sizes, where the size ranges from merely a few decimetres for small garden robots, to even more than 1 meter for large robots arranged to service for example airfields.

It should be noted that even though the description herein is focussed on the example of a robotic lawnmower, the teachings may equally be applied to other types of robotic work tools, such as robotic watering tools, robotic golf ball collectors, and robotic mulchers to mention a few examples.

It should also be noted that the robotic work tool is a self-propelled robotic work tool, capable of autonomous navigation within a work area, where the robotic work tool propels itself across or around the work area in a pattern (random or predetermined).

The robotic work tool 100, exemplified as a robotic lawnmower 100, has a main body part 140, possibly comprising a chassis 140 and an outer shell 140A, and a plurality of wheels 130 (in this example four wheels 130, but other number of wheels are also possible, such as three or six).

The main body part 140 substantially houses all components of the robotic lawnmower 100. At least some of the wheels 130 are drivably connected to at least one electric motor 155 powered by a battery 150. It should be noted that even if the description herein is focused on electric motors, combustion engines may alternatively be used, possibly in combination with an electric motor. In the example of figure 1, each of the wheels 130 is connected to a common or to a respective electric motor 155 for driving the wheels 130 to navigate the robotic lawnmower 100 in different manners. The wheels, the motor 155 and possibly the battery 150 are thus examples of components making up a propulsion device. By controlling the motors 155, the propulsion device may be controlled to propel the robotic lawnmower 100 in a desired manner, and the propulsion device will therefore be seen as synonymous with the motor(s) 150.

It should be noted that wheels 130 driven by electric motors is only one example of a propulsion system and other variants are possible such as caterpillar tracks.

The robotic lawnmower 100 also comprises a controller 110 and a computer readable storage medium or memory 120. The controller 110 may be implemented using instructions that enable hardware functionality, for example, by using executable computer program instructions in a general-purpose or special-purpose processor that may be stored on the memory 120 to be executed by such a processor. The controller 110 is configured to read instructions from the memory 120 and execute these instructions to control the operation of the robotic lawnmower 100 including, but not being limited to, the propulsion and navigation of the robotic lawnmower.

The controller 110 in combination with the electric motor 155 and the wheels 130 forms the base of a navigation system (possibly comprising further components) for the robotic lawnmower, enabling it to be self-propelled as discussed.

The controller 110 may be implemented using any suitable, available processor or Programmable Logic Circuit (PLC). The memory 120 may be implemented using any commonly known technology for computer-readable memories such as ROM, FLASH, DDR, or some other memory technology.

The robotic lawnmower 100 is further arranged in some embodiments with a wireless communication interface 115 for communicating with other devices, such as a server, a personal computer, a smartphone, the charging station, and/or other robotic work tools. Examples of such wireless communication devices are Bluetooth^{®}, WiFi^{®} (IEEE802.11b), Global System Mobile (GSM) and LTE (Long Term Evolution), to name a few. In some embodiments, the robotic lawnmower 100 is arranged to receive information, such as in the form of a map application (referenced 120A) of the operational area from such a device through the wireless interface. In some embodiments, the robotic lawnmower 100 is further configured to receive a confirmation of an operational area from such a device through the wireless interface. In figure 2A, there is shown an example of a device 220 being communicably connected to the robotic lawnmower 100. The device 220 may be a server and/or a personal computer, a tablet computer or a smartphone. It should be noted that any of the a personal computer, a tablet computer or a smartphone may be seen as to implement the server.

The robotic lawnmower 100 also comprises a work tool 160, which in the example of the robotic lawnmower 100 is a grass cutting device 160, such as a rotating blade 160/2 driven by a cutter motor 160/1. In embodiments where the robotic work tool 100 is exemplified as an automatic grinder, the work tool 160 is a rotating grinding disc.

The robotic lawnmower 100 further comprises at least one satellite signal navigation sensor 175 configured to provide navigational information (such as position) based on receiving one or more signals from a satellite - possibly in combination with receiving a signal from a beacon. In some embodiments the satellite navigation sensor is a GPS (Global Positioning System) device or other Global Navigation Satellite System (GNSS) device. In some embodiments the satellite navigation sensor is a RTK sensor.

The robotic lawnmower 100 may also or alternatively comprise deduced reckoning sensors 180. The deduced reckoning sensors may be odometers, accelerometer or other deduced reckoning sensors. In some embodiments, the deduced reckoning sensors are comprised in the propulsion device, wherein a deduced reckoning navigation may be provided by knowing the current supplied to a motor and the time the current is supplied, which will give an indication of the speed and thereby distance for the corresponding wheel.

In some embodiments, the robotic lawnmower 100 also comprises visual navigation sensors 185, such as a camera and/or a distance sensor (for example LIDAR or RADAR). By enabling the controller 110, possibly as a processor arrangement in the visual navigation sensor 185, to analyze signals received through the visual navigation sensor 185, the robotic lawnmower 100 may navigate the operational area based on visual navigation. In some such embodiments, the visual navigation is performed through Visual Simultaneous Localization and Mapping (VSLAM).

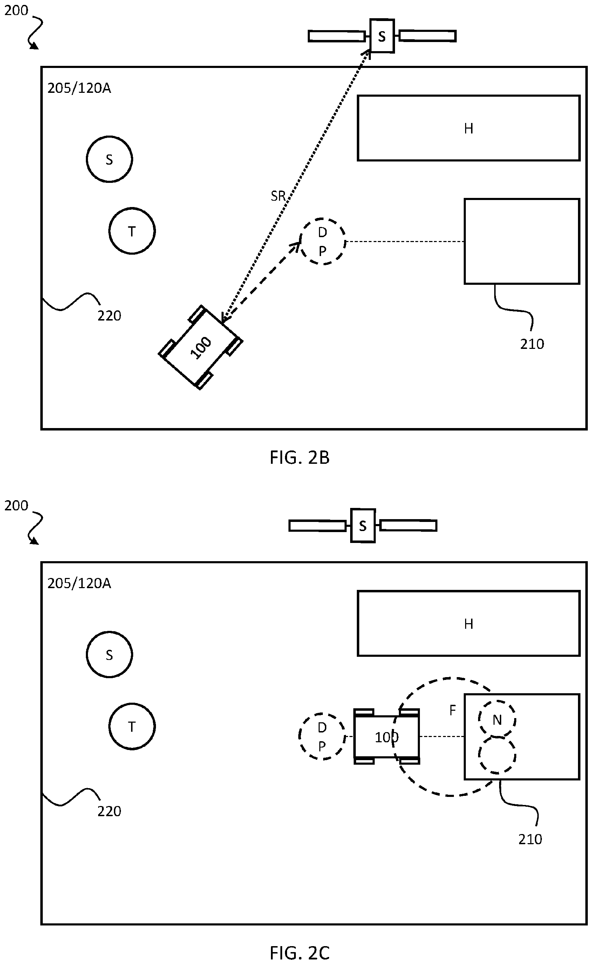

For enabling the robotic lawnmower 100 to navigate with reference to a boundary wire (referenced 220 in figure 2) emitting a magnetic field caused by a control signal transmitted through the wire, the robotic lawnmower 100 is configured to have at least one magnetic field sensor 170 arranged to detect the magnetic field and for detecting the wire and/or for receiving (and possibly also sending) information to/from a signal generator. In some embodiments, the sensors 170 may be connected to the controller 110, possibly via filters and an amplifier, and the controller 110 may be configured to process and evaluate any signals received from the sensors 170. The sensor signals are caused by the magnetic field being generated by the control signal being transmitted through the wire. This enables the controller 110 to determine whether the robotic lawnmower 100 is close to or crossing the boundary wire, or inside or outside an area enclosed by the boundary wire. In some embodiments the robotic work tool 100 is arranged with more than one magnetic sensor 170 which enables for an improved following of a wire where for example the orientation with regards to the wire can be taken into consideration. Using more than one magnetic sensor 170, for example 2 sensors, enables the robotic work tool 100 to follow a wire by straddling the wire with one sensor on either side of the wire.

In some embodiments, the robotic lawnmower 100 is arranged to sense a magnetic field emitted by a wire in a charging station (referenced 210 in figure 2A) in order to enable the robotic lawnmower 100 to navigate with regards to the charging station thereby enabling docking with the charging station. Such magnetic fields are well-known in the art and referred to as F-fields (for finding the charging station) and N-field (for navigating with regards to for example a bottom plate of the charging station in order to dock in the charging station).

The robotic lawnmower 100 is arranged to operate according to a map application (referenced 120A in figure 2A) representing one or more work areas (and possibly the surroundings of the work area(s)) stored in the memory 120 of the robotic lawnmower 100. The map application may be generated or supplemented as the robotic lawnmower 100 operates or otherwise moves around in the work area 205. In some embodiments, the map application includes one or more start regions and one or more goal regions for each work area. In some embodiments, the map application also includes one or more transport areas. The robotic work tool 100 is in some embodiments arranged to navigate according to the map based on the satellite navigation sensor 175 and/or deduced reckoning sensors 180.

Figure 2A shows a robotic work tool system 200 in some embodiments. The schematic view is not to scale. The robotic work tool system 200 comprises one or more robotic work tools 100 according to the teachings herein. It should be noted that the operational area 205 shown in figure 2A is simplified for illustrative purposes. The schematic view of figure 2 also illustrates a graphic representation of a map application 120A stored in the memory of the robotic work tool 100 as discussed in the above.

The robotic work tool system 200 comprises, in some embodiments, a boundary wire 220 through which a control signal is transmitted thereby generating a magnetic field, and which magnetic field is sensed by sensor(s) (170) in the robotic work tool 100. In some embodiments the control signal is generated by a signal generator comprised in a station.

In some embodiments as in addition to or as an alternative to the boundary generated by the boundary wire 220, the robotic work tool 100 is also or alternatively arranged to operate according to a virtual boundary also referenced 220 specified in the map application 120A based on the satellite navigation sensor(s) 175, and/or the deduced reckoning sensors 180.

As with figure 1, the robotic work tool(s) is exemplified by a robotic lawnmower, whereby the robotic work tool system may be a robotic lawnmower system or a system comprising a combination of robotic work tools, one being a robotic lawnmower, but the teachings herein may also be applied to other robotic work tools adapted to operate within a work area.

In some embodiments the robotic work tool is arranged or configured to traverse and operate in work areas that are not essentially flat, but contain terrain that is of varying altitude, such as undulating, comprising hills or slopes or such. The ground of such terrain is not flat and it is not straightforward how to determine an angle between a sensor mounted on the robotic work tool and the ground. The robotic work tool is also or alternatively arranged or configured to traverse and operate in a work area that contains obstacles that are not easily discerned from the ground. Examples of such are grass or moss-covered rocks, roots or other obstacles that are close to ground and of a similar colour or texture as the ground. The robotic work tool is also or alternatively arranged or configured to traverse and operate in a work area that contains obstacles that are overhanging, i.e. obstacles that may not be detectable from the ground up, such as low hanging branches of trees or bushes. Such a garden is thus not simply a flat lawn to be mowed or similar, but a work area of unpredictable structure and characteristics. The work area 205 exemplified with referenced to figure 2A, may thus be such a nonuniform work area as disclosed in this paragraph that the robotic work tool is arranged to traverse and/or operate in.

As is shown in figure 2A there may be obstacles such as houses (referenced H), structures, trees (referenced T), stones (referenced S) to mention a few examples that block signal reception in certain areas, hereafter referred to as shadowed areas. In figure 2A such obstacles are indicated and referenced H (as in house). The operational area may also have dynamic obstacles, such as pets for example a cat (referenced C), that can be detected by the robotic work tool 100 for example utilizing the visual navigation sensor(s) 185.

As is also shown in figure 2A there is arranged a service station 210, for example a charging station, that the robotic lawnmower 100 can dock in for receiving charging, dropping of any load (such as collected grass or golf balls) or both.

In some embodiments the robotic lawnmower 100 navigates from a docking point DP to the charging station 210 utilizing the satellite navigation sensor(s) 175 to a known location of the charging station 210, the location being stored in the map application 120A.

Figure 2B shows a further example of a robotic lawnmower system 200 as in figure 2A, where the robotic lawnmower 100 is configured to approach the charging station 210, or other service station, through a docking point, referenced DP. The use of a docking point enables for placement of the charging station 210 also in areas where the satellite reception may not be reliably received. As a skilled person would realize, satellite reception is not reliably received when not enough signals at a sufficiently high signal quality level is received. As a skilled person would also realize and know, the accuracy of the satellite navigation sensor increases with the number of satellite signals that are received at a high(er) quality level. As the number of signals received and/or the quality of the signals received reduces, the accuracy is also reduced, and in some embodiments, the satellite signals are regarded as not being reliably received as the accuracy falls under a threshold accuracy level.

In figure 2B it is shown how the robotic lawnmower 100 can navigate to the docking point DP, being arranged in a location where there is satellite reception (as indicated by the arrow referenced SR), accurately using the satellite navigation sensor(s) 175. Figure 2C shows how the robotic lawnmower 100 then can navigate from the docking point to the charging station 210 not necessarily relying on the satellite navigation sensor(s) 175. In some embodiments the robotic lawnmower 100 navigates from the docking point DP to the charging station 210 utilizing the deduced reckoning sensor(s) 180 to a known location of the charging station 210. In some such embodiments, the robotic lawnmower navigates along a specified path (for example straight) and/or for a specified distance (time distance, physical distance and/or distance determined by the deduced reckoning sensor(s) 180) to the charging station 210 or to a point where the N or F-field can be sensed enabling the robotic lawnmower 100 to dock in the charging station 210.

In some embodiments the robotic lawnmower 100 navigates from the docking point DP to the charging station 210 utilizing the visual navigation sensor(s) 185 to a known location of the charging station 210. In some such embodiments, the robotic lawnmower navigates to a point where the N or F-field can be sensed enabling the robotic lawnmower 100 to dock in the charging station 210.

In some embodiments the robotic lawnmower 100 navigates from the docking point DP to the charging station 210 utilizing the magnetic sensor(s) 170 to a known location of the charging station 210. In some such embodiments, the robotic lawnmower navigates to a point where the N or F-field can be sensed enabling the robotic lawnmower 100 to dock in the charging station 210.

Such docking procedures are well-known to the skilled person and will not be discussed in further detail herein.

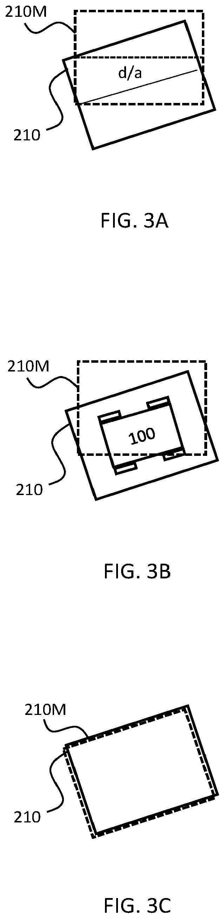

As discussed in the summary above, there may be situations where the location of the charging station 210 has been changed - voluntarily or involuntarily. Figure 3A shows a schematic view of a charging station 210 and a stored location 210M for the charging station 210. As is illustrated in figure 3A, the charging station 210 may have been moved a distance d. As is also illustrated in figure 3A, the charging station 210 may have been moved or rotated an angle a. In the example of figure 3A, the charging station 210 has both been moved a distance d and rotated an angle a.

In some embodiments the robotic lawnmower 100 is configured to detect that the location of the charging station 210 has changed based on sensing the N and or F-field and detecting a change in the magnetic field as compared to an expected (stored) field intensity.

In some embodiments the robotic lawnmower 100 is configured to detect that the location of the charging station 210 has changed based on determining a location (position and/or heading) when docked (as shown in figure 2B) in the charging station 210, for example based on deduced reckoning sensor(s) 180 and/or based on the visual navigation sensor(s) 185. In some such embodiments the location of the charging station 210 is taken to be the location of the robotic lawnmower 100 when docked.

As mentioned above, the location of the charging station 210 may have been changed in a change in position (i.e. a translation) and/or a change in heading (i.e. a rotation).

As the robotic lawnmower 100 detects the change in location for the charging station 210, it determines whether the change is below an acceptance level, and if so, the robotic lawnmower 100 updates the stored location (position and/or heading) of the charging station 210 to the new location (position and/or heading) of the charging station 210. Figure 3C shows a schematic view of how the stored location 210M is updated to align with the actual location of the charging station 210.

In some embodiments the threshold acceptance level relates to a distance. And in some such embodiments, the threshold acceptance level distance is 0.25, 0.5, 0.75 or 1 meter or any range therein between. In some such alternative or additional embodiments, the threshold acceptance level distance is related to the size of the robotic lawnmower 100, and is 10, 25, 50, 75 or 100% of the width or length of the robotic lawnmower 100 or any range therein between. In some such alternative or additional embodiments, the threshold acceptance level distance is related to the size of the work tool 160, and is 50, 75, 100 or 150% of the size of the work tool 160 or any range therein between.

In some embodiments the threshold acceptance level relates to an angle. And in some such embodiments, the threshold acceptance level angle is 5, 10, 30, 45, 60, 90, 120 or 180 degrees or any range therein between.

In some embodiments, the robotic lawnmower 100 is further arranged to determine that the accuracy of the navigation sensors used is above an accuracy threshold level, and if so update the location, and if not refrain from updating the location as the location cannot be determined at a satisfactory accuracy.

In some embodiments the accuracy threshold level is set (during assembly, during installation, or prior to any specific or non-specific operation) to be larger than the accuracy of the positioning sensor (for example the satellite navigation sensor) used for positioning. In some such embodiments, the accuracy threshold level is set to be larger than a reported accuracy for the satellite navigation sensor. In some embodiments, the accuracy threshold level is decreased if the deduced reckoning sensors report errors or inconsistencies, such as detecting wheel slip and/or incorrect (compass) heading. This will enable the operation as discussed herein to continue to operate also in areas where it is difficult to determine a position correctly due to for example rain.

In some embodiments, the accuracy threshold level is based on how many features a vision-based navigation sensor is detecting, where an increase in features provide for an increased accuracy threshold level.

In some embodiments the accuracy level relates to a distance value, wherein the accuracy indicates with which error margin in meters that a position can be determined.

In some embodiments the accuracy threshold level is set to be a radius extending from a center of the charging station, and in some such embodiments the radius is set to be 0.1, 0.2, 0.3, 0.4, 0.5 or 1 meter or any range thereinbetween.

In some embodiments the accuracy threshold level is set to be two radii, defining an ellipse extending from a center of the charging station, where the major radius is in a direction orthogonal to the entry direction of the charging station, the minor radius thus being parallel to the entry direction of the charging station. In some such embodiments the major radius is set to be 0.1, 0.2, 0.3, 0.4, 0.5 or 1 meter or any range thereinbetween.

In some embodiment the accuracy threshold level is a value in a range, for example 1 to 100, where a value at one end of the scale (for example a higher value as 100 in the example of a range 1 to 100) indicates a high accuracy, where possibly the end of the scale indicates the highest accuracy possible, and where the lowest indicates not possible to determine a position.

In some embodiments the accuracy threshold level is changed dynamically, whereas in some embodiments the accuracy threshold level is static - at least during operation. In some such embodiments the accuracy threshold level may be set by a user or operator. In embodiments where the accuracy level is static (at least during operation) the accuracy of the sensor could change during operation due to external factors such as moving satellites). In some situations and installations, the accuracy level is set prior to installation, and the accuracy achieved through the navigation sensor will depend on the environmental factors of the installation, wherefor the operation as discussed herein may be operable in some installations but not in others.

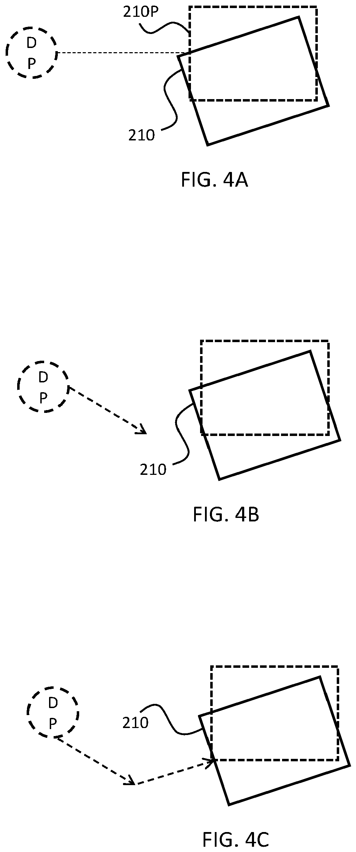

As noted above, the robotic lawnmower 100 is in some embodiments arranged to approach the charging station 210 by navigating to a docking point and from the docking point navigate (in a known manner) to the charging station 210. Figure 4A shows a schematic view of a charging station that has been moved wherein the known location 210M of the charging station is indicated as well as the docking point DP.

In some embodiments, the robotic lawnmower 100 is configured to maintain the docking point even though the charging station has moved. This has the benefit that the docking point remains in a known location where the satellite navigation is ensured.

In some such embodiments the robotic lawnmower 100 is configured to maintain the docking point if the location of the charging station has changed by less than a second threshold acceptance level.

In some such embodiments the second threshold acceptance level relates to a second angle. And in some such embodiments, the second acceptance level angle is 5, 10, 30, 45, 60, 90, 120 or 180 degrees or any range therein between. In some embodiments the second acceptance level angle is less than the threshold acceptance level angle. In some embodiments the second acceptance level angle is the same as the threshold acceptance level angle.

In some such alternative or additional embodiments the second threshold acceptance level relates to a second distance. In some embodiments the second acceptance level distance is less than the threshold acceptance level distance. In some embodiments the second acceptance level distance is the same as the threshold acceptance level distance.

In some embodiments or situations where the robotic lawnmower 100 maintains the docking point, the robotic lawnmower 100 is further configured to update the path to the charging station 210. In some such embodiments, and as shown in figure 4B, the update is to include a direction in which to search for the charging station 210. By determining that the charging station has moved to a new location, the robotic lawnmower 100 is also able to determine which direction the robotic lawnmower 100 should travel in order to reach or be able to find the charging station, for example by searching for the F field or through visual navigation. In the example of figure 4B, the charging station has moved to the right from the perspective of an approaching robotic lawnmower 100 (not shown), i.e from the perspective of the docking point, and the path to the charging statin 210 is updated to indicate that the robotic lawnmower 100 should travel towards the new location, in this example to the right.

In some embodiments the path is updated more specifically enabling the robotic lawnmower 100 to more easily find the charging station without having to search (at least not spend any substantial time searching) for the charging station 210. Figure 4C shows an example where the patis updated to a new path, where the new path includes a turning point and an angle of turning, enabling the robotic lawnmower to dock with the charging station head on.

In some embodiments the robotic lawnmower 100 is configured to not maintain the docking point, and instead updating the docking point DP. In some such embodiments, the robotic lawnmower 100 is configured to update the docking point if the location of the charging station has changed by more than the second threshold acceptance level.

In some such embodiments the robotic lawnmower 100 is configured to update the docking point by simply changing the location of the docking point so that the same path may be used from the docking point to the charging station 210.

It should be noted that the robotic lawnmower 100 is in some embodiments configured to update the (known) location of the charging station 210 (and/or the docking point) locally in the robotic lawnmower 100. In some embodiments the robotic lawnmower 100 is configured to update the (known) location of the charging station 210 (and/or the docking point) remotely in a server or other device as discussed in relation to the wireless interface. The robotic lawnmower 100 is in such embodiments considered to update the location(s) by causing the server or other device to do the update by informing the server or other device of the new location of the charging station 210.

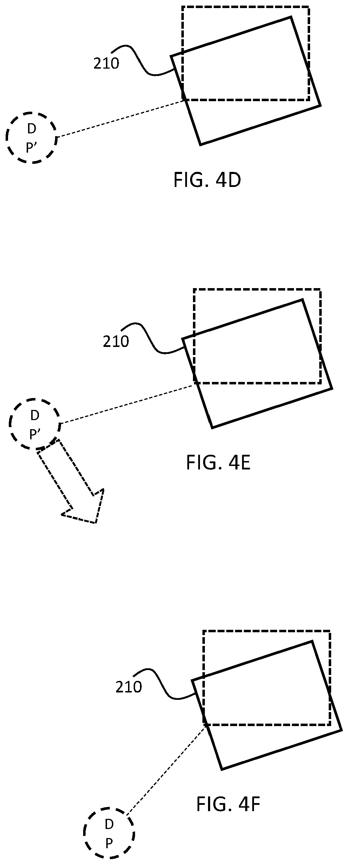

Figure 4D shows an example where an updated docking point DP' is simply moved to be in the same relative position as regards the charging station 210, i.e. without changing the relative path from the docking point DP to the charging station 210.

In some embodiments the robotic lawnmower 100 - possibly through the server - is arranged to receive a confirmation for the updated docking point DP'. In some such embodiments, the robotic lawnmower system 200 is configured to receive the confirmation by causing the display of a proposed docking point location on a map view of the operational area 205 that is displayed on a display of the device 220. The proposed docking point DP' may be determined by the robotic lawnmower 110 and transmitted to the server 220 or determined by the server 220, whereby the robotic lawnmower 100 is seen to cause the server 220 to do so by providing the new location of the charging station 210.

A user may thereby input an acceptance of the proposed docking point whereby the updated docking point DP' is stored as the docking point to be used. In some embodiments a user may propose an alternative docking point to be used. In some embodiments the user proposes the alternative docking point by dragging the proposed docking point to a new location. In some embodiments the user proposes the alternative docking point by indicating a new location for the proposed docking point. In either case, the robotic lawnmower 100 is configured to receive a new location for the updated docking point from the user - possibly through the server or other device 220.

Figure 4E shows how the proposed docking point DP' is moved (indicted by the arrow) and Figure 4F shows how the docking point is accepted at the new location.

By allowing the user to confirm the proposed docking point and/or to propose an alternative updated docking point, the user is able to ensure that the new docking point does not interfere with the use of the operational area. For example, the proposed docking point may coincide with a favourite sunning spot or a resting place for a cat or other pet.

In some embodiments the user is enabled to confirm the new position of the charging station 210 and may reject it and go out and change the position back to its original position.

As a skilled person would understand the server or other device may be arranged with a touch display and/or a non-touch display on which graphical objects may be moved or indicated through the use of various known input methodologies such as mouse cursor manipulation or touch input.

Figure 6 shows a flowchart for a general method according to herein. The method is for use in a robotic work tool as in figure 1 in a manner as discussed above in relation to figures 3A, 3B and 3C and figures 4A, 4B, 4C, 4D, 4E and 4F. The method comprises the robotic work tool 100 detecting 510 that there has been a change in a location of the charging station 210, and in response thereto determining 520 that the change is below a threshold acceptance level, and if so, automatically updating 530 the location 210M of the charging station 210 in the map application 120A of the operational area 205.

It should be understood that any, some or all updates of locations, docking points and/or paths are of course performed by the controller (or by the server) in the map application 120A.

## Claims

1. A robotic work tool (100) arranged to operate in an operational area (205) housing a service station (210), the robotic work tool (100) comprising a navigation sensor (175, 170, 180, 185), a memory (120) storing a map application (120A) of the operational area (205) and a controller (110), wherein the controller (110) is configured to
detect that there has been a change in a location of the service station (210), and in response thereto determine that the change is below a threshold acceptance level, and if so, updating the location (210M) of the service station (210) in the map application (120A) of the operational area (205).

2. The robotic work tool (100) according to claim 1, wherein the controller (110) is further configured to determine that the accuracy of the navigation sensor (175, 170, 180, 185) used is above an accuracy threshold level, and if so update the location of the service station (210).

3. The robotic work tool (100) according to claim 1 or 2, wherein the controller (110) is further configured to
update a docking point (DP) for the service station (210) in response to detecting that the location of the service station (210) has been changed.

4. The robotic work tool (100) according to claim 3, wherein the controller (110) is further configured to
determine that the change is below a second threshold acceptance level, and if so,
update the docking point (DP) for the service station in response to detecting that the location of the service station (210) has been changed.

5. The robotic work tool (100) according to claim 3 or 4, wherein the controller (110) is further configured to
receive a confirmation of a proposed docking point (DP') and in response thereto update the docking point (DP) to the proposed docking point (DP').

6. The robotic work tool (100) according to claim 5, wherein the controller (110) is further configured to
receive an alternative docking point (DP') from a user and in response thereto update the docking point (DP) to the alternative docking point (DP').

7. The robotic work tool (100) according to any preceding claim, wherein the controller (110) is further configured to
maintain the docking point (DP) for the service station (210) and updating a path from the docking position (DP) to the service station (210) in response to detecting that the location of the service station (210) has been changed.

8. The robotic work tool (100) according to claim 7, wherein the controller (110) is further configured to
update the path by indicating a direction of a new location of the service station (210).

9. The robotic work tool (100) according to claim 8, wherein the controller (110) is further configured to
update the path by indicating a turning point and a turning degree to the new location of the service station (210).

10. The robotic work tool (100) according to any preceding claim, wherein the threshold acceptance level relates to an angle (a), or a distance (d).

11. The robotic work tool (100) according to any preceding claim, wherein the robotic work tool is a robotic lawnmower (100).

12. The robotic work tool (100) according to any preceding claim, wherein the navigation sensor (175, 170, 180, 185) includes a deduced reckoning sensor (180).

13. The robotic work tool (100) according to any preceding claim, wherein the navigation sensor (175, 170, 180, 185) includes a satellite navigation sensor (175).

14. The robotic work tool (100) according to any preceding claim, wherein the navigation sensor (175, 170, 180, 185) includes a visual navigation sensor (185).

15. The robotic work tool (100) according to any preceding claim, wherein the navigation sensor (175, 170, 180, 185) includes a magnetic sensor (170) arranged to sense a magnetic field (F, N) emanating from the service station (210).

16. A robotic work tool system (200) comprising a robotic work tool (100) according to any preceding claim, a service station (210).

17. A method for use in a robotic work tool (100) arranged to operate in an operational area (205) housing a service station (210), the robotic work tool (100) comprising a navigation sensor (175, 170, 180, 185) and a memory (120) storing a map application (120A) of the operational area (205), the method comprising:
detecting that there has been a change in a location of the service station (210), and in response thereto determining that the change is below a threshold acceptance level, and if so, automatically updating the location (210M) of the service station (210) in the map application (120A) of the operational area (205).
